# EUROPEAN PATENT APPLICATION

(11) **EP 4 585 302 A1**
(43) Date of publication of application: **16.07.2025**
(21) Application number: 23861780.7
(22) Date of filing: 18.01.2023
(51) Int. Cl.: B01J 19/00, B01D 3/06, C08F 10/06, C08F 2/01

(54) **DEVICE AND METHOD FOR PREPARING SPG II POLYPROPYLENE**

(30) Priority: 05.09.2022 CN 202211075974
(71) Applicant: Tianhua Institute of Chemical Machinery and Automation Co., Ltd., Lanzhou, Gansu 730060 (CN); Tianhua Institute (Nanjing) Intelligent Manufacturing Co., Ltd, Nanjing, Jiangsu Province 211178 (CN); National Engineering Technology Research Center of Drying Technology & Equipment, Xigu Lanzhou, Gansu 730060 (CN)
(72) Inventor: ZHANG, Wanyao, Lanzhou, Gansu 730060 (CN); SHEN, Yanshun, Lanzhou, Gansu 730060 (CN); LIANG, Julong, Lanzhou, Gansu 730060 (CN); HUANG, Shuai, Lanzhou, Gansu 730060 (CN); ZHANG, Xiaoyang, Lanzhou, Gansu 730060 (CN); WANG, Jiangang, Lanzhou, Gansu 730060 (CN); LIANG, Yuanyue, Lanzhou, Gansu 730060 (CN); WANG, Shijun, Lanzhou, Gansu 730060 (CN); CAO, Shanfu, Lanzhou, Gansu 730060 (CN); LI, Juntao, Lanzhou, Gansu 730060 (CN); WANG, Lei, Lanzhou, Gansu 730060 (CN); LI, Yaxiang, Lanzhou, Gansu 730060 (CN); SI, Huanhuan, Lanzhou, Gansu 730060 (CN); GU, Xin, Lanzhou, Gansu 730060 (CN); ZHAN, Zhongfu, Lanzhou, Gansu 730060 (CN)
(74) Representative: SSM Sandmair
(86) International application number: PCT/CN2023/072928
(87) International publication number: WO 2024/051068

(57) **Abstract**

A device and method for preparing SPG II polypropylene. The device comprises: a polymerization unit, a steaming unit and a drying unit, wherein the polymerization unit comprises a pre-polymerization kettle (104), a first reactor (105), a first reaction condenser (106), a first propylene condensate tank (107) and a second reactor (109); the first reactor (105) is in communication with the pre-polymerization kettle (104); the first reaction condenser (106) is in communication with the top of the first reactor (105); the top of the first propylene condensate tank (107) is in communication with each of the first reaction condenser (106) and the first reactor (105), and the bottom of the first propylene condensate tank (107) is in communication with the first reactor (105); and the top of the second reactor (109) is in communication with the bottom of the first reactor (105).

## Description

### BACKGROUND OF THE INVENTION

### Field of the Invention

The invention relates to a device and a process technique for producing polypropylene, and particularly to a device and method for preparing SPG II polypropylene.

### Related Art

Currently, there are two mainstream process techniques for producing polypropylene internationally, which may be divided into two types: bulk-vapor phase combined process and vapor phase process. In particular, the bulk-vapor phase combined process has a reaction form of loop reactors plus fluidized bed reactors, and the vapor phase method has multiple forms of reactors including fluidized bed reactors plus fluidized bed reactors, vertical kettle reactors plus vertical kettle reactors, horizontal kettle reactors plus horizontal kettle reactors, and multi-zone recycle reactors plus fluidized bed reactors. Local hot spots are easily formed within the vapor phase reactors, resulting in agglomeration of polymer, thus causing fouling of the device. To solve this problem, most of the vapor phase reactors are equipped with mechanical stirrer, and forced mechanical stirring enables moist materials be uniformly distributed, thereby reducing probability of hot spots during the reaction. However, there are significant difficulties for the reactors and the stirrers thereof in terms of the mechanical seal therebetween, and processing and manufacturing thereof, which requires high processing precision. That is, the design, processing and post-maintenance costs are all high. However, the bulk-vapor phase combined process avoids the "hot spot" defect, and the device may be operated reliably for a long time. As compared to the vapor phase method, the bulk-vapor phase combined process has several advantages, but has the following problems: firstly, oligomers cannot be vaporized from slurry polymerization at 70°C; secondly, there is a high steam consumption; thirdly, heavy components such as oligomers obtained from washing of the high-pressure propylene washing tower and high molecular weight powders all return to the final product, and if not, unit consumption would be significantly affected.

### SUMMARY OF THE INVENTION

To solve the above problems in the bulk-vapor phase combined process, the present application provides a device and a method for preparing SPG II polypropylene. The device for preparing SPG II polypropylene in the present application can reduce production cost, the grades of the products can be changed freely, and the obtained product has a high cleanliness.

To achieve the above object, the present application provides a device for preparing SPG II polypropylene, including: a polymerization unit, a steaming unit and a drying unit; the polymerization unit includes a pre-polymerization kettle, a first reactor, a first reaction condenser, a first propylene condensate tank and a second reactor; the first reactor is in communication with the pre-polymerization kettle; the first reaction condenser is in communication with a top of the first reactor; a top of the first propylene condensate tank is in communication with the first reaction condenser and the first reactor, respectively, and a bottom of the first propylene condensate tank is in communication with the first reactor; a top of the second reactor is in communication with a bottom of the first reactor.

In one embodiment, the polymerization unit further includes a second reaction cyclone separator, a second reaction condenser and a second propylene condensate tank, the second reaction cyclone separator is in communication with a top of the second reactor, the second reaction condenser is in communication with a top of the second reaction cyclone separator, the second propylene condensate tank is in communication with the second reaction condenser, and the second propylene condensate tank is further in communication with the second reactor.

In one embodiment, the polymerization unit further includes a third reactor, a third reaction cyclone separator, a third reaction condenser and a third propylene condensate tank, the third reaction cyclone separator is in communication with the top of the third reactor, the third reaction condenser is in communication with a top of the third reaction cyclone separator, the third propylene condensate tank is in communication with the third reaction condenser, and the third propylene condensate tank is further in communication with the third reactor; the second reactor and the third reactor are arranged in series or in parallel; an air lock and a reversing valve are provided between the second reactor and the third reactor, and the reversing valve is configured to be a 30° reversing valve, a 60° reversing valve or a 120° reversing valve; each of the second reactor and the third reactor is a single air bag type or a double air bag type.

In one embodiment, the steaming unit includes: a bag filter, a propylene cooler, a propylene gas buffer tank, a steamer, a steamer cyclone separator, a steamer washing tower and a hydrocarbon-water-separation tank; a top of the bag filter, the propylene cooler and the propylene gas buffer tank are connected sequentially, and a bottom of the bag filter is in communication with the steamer; a top of the steamer is in communication with the steamer cyclone separator; a bottom of the steamer cyclone separator is in communication with the steamer; a top of the steamer cyclone separator is in communication with the steamer washing tower; the steamer washing tower, at a middle-upper part of the steamer washing tower, is in communication with the hydrocarbon-water-separation tank; and the steamer washing tower is configured to be an integral type of a condenser and a washing tower, or a separate type of a condenser and a washing tower.

In one embodiment, the drying unit includes: a dryer, a dryer cyclone separator, a first powder hopper, a second powder hopper, a dry gas washing tower, a plate heat exchanger, a mesh demister, a dry gas circulating fan and a dry gas heater; a bottom of the dryer is in communication with the second powder hopper, a top of the dryer is in communication with the dryer cyclone separator at a middle-upper part of the dryer cyclone separator, a bottom of the dryer cyclone separator is in communication with the first powder hopper, a top of the dryer cyclone separator is in communication with the dry gas washing tower at a middle-lower part of the dry gas washing tower, a top of the dry gas washing tower is in communication with the mesh demister, and the mesh demister, the dry gas circulating fan, the dry gas heater and the bottom of the dryer are connect sequentially; a spill plate, and a plurality of distribution plates evenly distributed are provided inside the dryer; each of the bottom of the dryer cyclone separator, a bottom of the first powder hopper and a bottom of the second powder hopper is provided with a rotary discharge valve; the rotary discharge valve is configured to be a pneumatic gate valve, or a Y-shaped reversing valve combined by two valves; the plate heat exchanger is configured to be a tube type heat exchanger; and the dry gas heater is configured to be a tube type heat exchanger, or a fin type heat exchanger, or an electric heater.

The present application further provides a method for preparing SPG II polypropylene adopting the device for preparing the SPG II polypropylene, including the steps of:
step (1), charging a reaction raw material containing propylene into the pre-polymerization kettle for a pre-polymerization reaction, and charging a resultant of the pre-polymerization reaction into the first reactor for a first polymerization reaction, wherein reaction heat produced during the first polymerization reaction is removed by vaporization of the propylene;
step (2), charging a resultant of the first polymerization reaction in step (1) into the second reactor for a first gas-phase reaction, wherein reaction heat produced during the first gas-phase reaction is removed by vaporization of the propylene; and
step (3), performing a first gas-solid separation on a resultant of the first gas-phase reaction in step (2), recycling gases obtained from the first gas-solid separation, and steaming solids obtained from the first gas-solid separation using steam to remove organic matters and oligomers from the resultant of the first gas-phase reaction in step (2); drying moist materials after steaming to obtain SPG II polypropylene.

In one embodiment, in step (1), the reaction raw material includes propylene, a main catalyst, a cocatalyst, a electron donor and a mineral oil, wherein the main catalyst is titanium magnesium catalyst TiCl₄/MgCl₂; the cocatalyst is a trialkylaluminum compound, which is at least one of triethyl aluminum and tri-n-butylaluminum; the electron donor is at least one selected from the group consisting of dicyclopentyl dimethoxysilane, cyclohexyl dimethoxysilane and triethoxysilane; a pressure for the pre-polymerization reaction is from 2.0 MPaG to 6.0 MPaG, a temperature for the pre-polymerization reaction is from -5 °C to 70 °C, and a period for the pre-polymerization reaction is from 8 minutes to 30 minutes; a pressure for the first polymerization reaction is from 2.0 MPaG to 4.0 MPaG, a temperature for the first polymerization reaction is from 30 °C to 95 °C, and a reaction period for the first polymerization reaction is from 0.5 hour to 2 hours; in the reaction raw material, after condensation, a gas-liquid separation is performed on propylene gas formed by vaporization of a part of propylene due to heat released in the first polymerization reaction, gases obtained from the gas-liquid separation are returned to the first reactor as the reaction raw material for cyclic utilization, and liquids obtained from the gas-liquid separation are configured to remove heat from the first polymerization reaction of the first reactor.

In one embodiment, in step (2), a pressure for the first gas-phase reaction is from 1.5 MPaG to 2.7 MPaG, a temperature for the first gas-phase reaction is from 70 °C to 150 °C, and a period for the first gas-phase reaction is from 3 hours to 4 hours; in step (2), during the first gas-phase reaction, gases carrying solid particles are discharged from the top of the second reactor, the gases carrying solid particles undergo a second gas-solid separation, after condensation, gases obtained from the second gas-solid separation are returned to the second reactor as the reaction raw material for cyclic utilization or configured to remove heat from the first gas-phase reaction of the second reactor, and after mixing with ethylene and hydrogen gas, and solids obtained from the second gas-solid separation are returned to the second reactor to perform the first gas-phase reaction again.

In one embodiment, the method further includes step (2-1) between step (2) and step (3); the step (2-1) is: charging the resultant of the first gas-phase reaction in step (2) into a third reactor for a second gas-phase reaction, wherein, during the first gas-phase reaction, reaction heat is removed by vaporization of propylene; a gas-phase resultant obtained from the second gas-phase reaction undergo a third gas-solid separation, after condensation, gases obtained from the third gas-solid separation are returned to the third reactor as the reaction raw material for cyclic utilization or configured to remove heat from the second gas-phase reaction of the third reactor, and after mixing with ethylene and hydrogen gas, solids obtained from the third gas-solid separation are returned to the third reactor for the second gas-phase reaction again; a pressure for the second gas-phase reaction is from 1.0 MPaG to 2.0 MPaG, a temperature for the second gas-phase reaction is from 70 °C to 150 °C, and a period for the second gas-phase reaction is from 2 hours to 3 hours.

In one embodiment, the drying uses a vertical fluidized bed, and removes moisture using circulating nitrogen gas.

The pre-polymerization reaction and the first polymerization reaction of the preparation method of the present application are performed in liquid propylene without use of inert solvent, so monomer concentration within the reaction system is high, and a rate of polymerization is fast, such that the production capability of the device is largely improved. The viscosity of polypropylene slurry of the present application is low, which is easy to be mechanically stirred, such that design and manufacturing costs of the reactor in the device are reduced, meanwhile, the energy consumption in the device and reaction process is reduced. In the reaction of the present application, flashing of propylene is adopted to remove heat without use of large liquid pump, which saves electricity consumption. The product obtained from the preparation method and device of the present application has a high cleanliness, and high-quality products with wide coverage of grades may be obtained. The preparation method of the present application has a low requirement on the purity of the raw material monomer propylene, so the source of the raw material propylene is abundant, thereby reducing production costs. The device of the present application has high safety and operability. The preparation device and method of the present application do not produce block materials, which overcomes the disadvantage that the horizontal kettle process is prone to producing block materials. The device of the present application has a short construction cycle and compact arrangement, and may be constructed in a modular manner. The device of the present application has low investment costs, which is approximately one-third of the mainstream device.

### BRIEF DESCRIPTION OF THE DRAWINGS

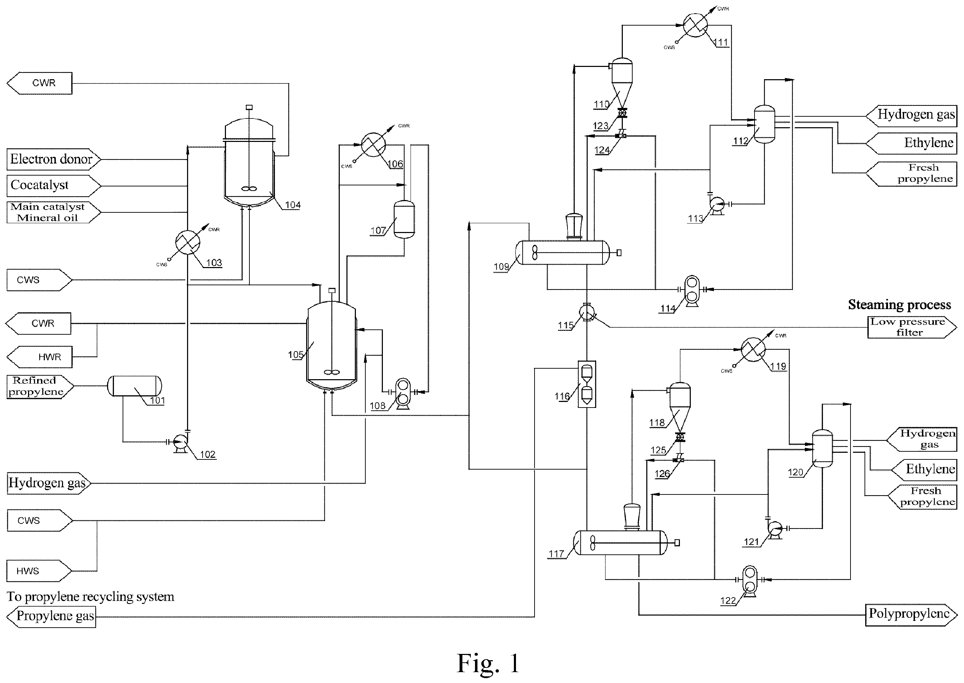

FIG. 1 is a process flow diagram of a polymerization unit in one embodiment of a device for preparing SPG II polypropylene according to the present application.

In particular, the reference signs in FIG. 1 are as follows: 101-propylene feed tank, 102-propylene feed pump, 103-feed pump cooler, 104-pre-polymerization kettle, 105-first reactor, 106-first reaction condenser, 107-first propylene condensate tank, 108-first reaction circulating fan, 109-second reactor, 110-second reaction cyclone separator, 111-second reaction condenser, 112-second propylene condensate tank, 113-first propylene condensate pump, 114-second reaction circulating fan, 115-reversing valve, 116-air lock, 117-third reactor, 118-third reaction cyclone separator, 119-third reaction condenser, 120-third propylene condensate tank, 121-second propylene condensate pump, 122-third reaction circulating fan, 123-first rotary discharge valve, 124-first ejector, 125-second rotary discharge valve, 126-second ejector.

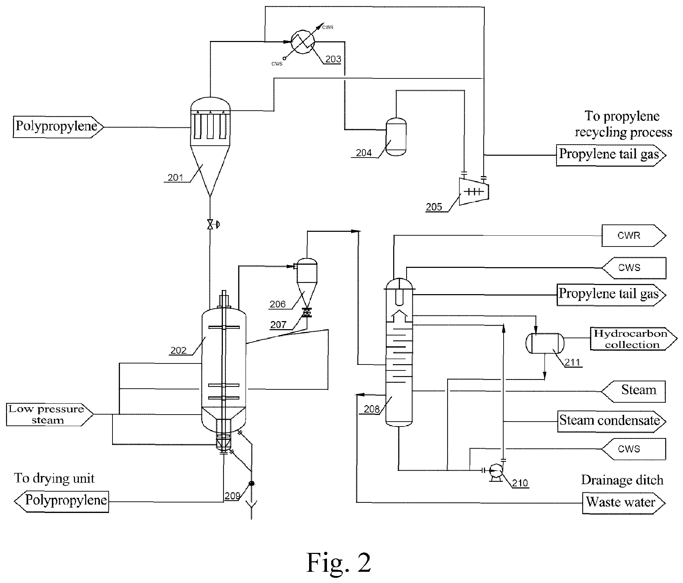

FIG. 2 is a process flow diagram of a steaming unit in one embodiment of a device for preparing SPG II polypropylene according to the present application.

In particular, the reference signs in FIG. 2 are as follows: 201-bag filter, 202-steamer, 203-propylene cooler, 204-propylene gas buffer tank, 205-propylene gas pressurization fan, 206-steamer cyclone separator, 207-third rotary discharge valve, 208-steamer washing tower, 209-steam trap, 210-washing tower circulating pump, 211-hydrocarbon-water-separation tank.

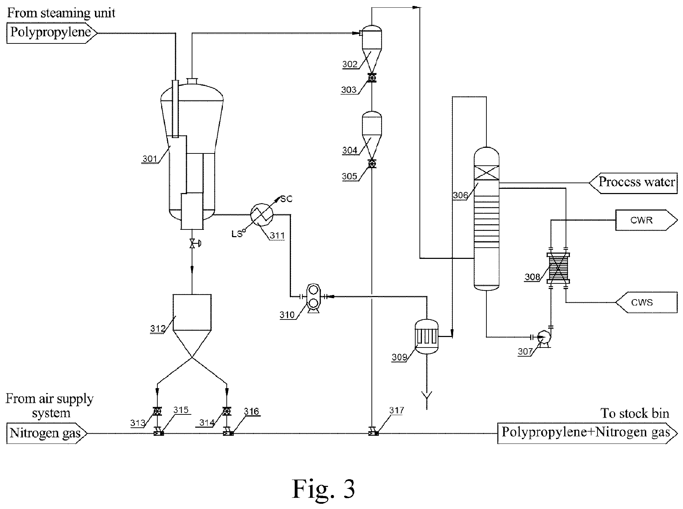

FIG. 3 is a process flow diagram of a drying unit in one embodiment of a device for preparing SPG II polypropylene according to the present application.

In particular, the reference signs in FIG. 3 are as follows: 301-dryer, 302-dryer cyclone separator, 303-fourth rotary discharge valve, 304-first powder hopper, 305-fifth rotary discharge valve, 306-dry gas washing tower, 307-washing liquid circulating pump, 308-plate heat exchanger, 309-mesh demister, 310-dry gas circulating fan, 311-dry gas heater, 312-second powder hopper, 313-sixth rotary discharge valve, 314-seventh rotary discharge valve, 315-third ejector, 316-fourth ejector, 317-fifth ejector.

### DETAILED EMBODIMENTS OF THE INVENTION

Hereinafter various embodiments are proposed for detailed explanations. However, the embodiments are only for illustrative purposes and do not intend to limit the protection scope of the present application.

A device for preparing SPG II polypropylene in the present application includes a polymerization unit, a steaming unit and a drying unit.

Referring to FIG. 1, FIG. 1 is a process flow diagram of a polymerization unit in one embodiment of a device for preparing SPG II polypropylene according to the present application. In this embodiment, the polymerization unit includes a pre-polymerization kettle 104, a first reactor 105, a first reaction condenser 106, a first propylene condensate tank 107 and a second reactor 109; the first reactor 105 is in communication with the pre-polymerization kettle 104; the first reaction condenser 106 is in communication with the top of the first reactor 105; the top of the first propylene condensate tank 107 is in communication with the first reaction condenser 106 and the first reactor 105, respectively, and the bottom of the first propylene condensate tank 107 is in communication with the first reactor 105; and the top of the second reactor 109 is in communication with the bottom of the first reactor 105.

Propylene is charged into a propylene feed tank 101, and after being delivered to a feed pump cooler 103 via a propylene feed pump 102 for cooling, propylene is mixed with a main catalyst, a cocatalyst, an electron donor and a mineral oil to form a reaction raw material containing propylene, and then the reaction raw material containing propylene is charged into the pre-polymerization kettle 104. The main catalyst of the present application includes but not limited to titanium magnesium catalyst TiCl₄/MgCl₂, the cocatalyst includes but not limited to a trialkylaluminum compound, which includes but not limited to at least one of triethyl aluminum and tri-n-butylaluminum, and the electron donor includes but not limited to at least one of dicyclopentyl dimethoxysilane, cyclohexyl dimethoxysilane and triethoxysilane. A mass ratio of the main catalyst to the electron donor of the present application includes but not limited to 1:0.01 to 1:100, a mass ratio of the main catalyst to propylene of the present application includes but not limited to 1:20,000 to 1:100,000, a mass ratio of the main catalyst to the cocatalyst of the present application includes but not limited to 1:0.01 to 1:50, and a mass ratio of the main catalyst to the mineral oil includes but not limited to 1:1 to 1:1,000. The reaction raw material undergoes a pre-polymerization reaction in the pre-polymerization kettle 104 at a pressure of 2.0 MPaG to 6.0 MPaG, a reaction temperature of -5°C to 70°C for a period of 8 minutes to 30 minutes. During the pre-polymerization reaction, reaction heat may be removed by circulating water through a jacket and an inner cooling pipe of the pre-polymerization kettle 104, thereby ensuring stability of the temperature during the reaction.

When the pre-polymerization reaction is completed, the reaction slurry in the pre-polymerization kettle 104 is delivered to the first reactor 105 by means of its own pressure, then a first polymerization reaction is performed within the first reactor 105 at a pressure of 2.0 MPaG to 4.0 MPaG, a reaction temperature of 30°C to 95°C for a period of 0.5 hour to 2 hours. During the first polymerization reaction, the temperature may be controlled by the following ways: at the initial stage of reaction, hot water is introduced into the jacket of the first reactor 105, a temperature of the reaction slurry within the first reactor 105 is increased, and then the first polymerization reaction is performed. With occurrence of the first polymerization reaction, the temperature within the first reactor 105 is increased, and stability of the temperature in the reaction process may be ensured by removing the hot water in the jacket of the first reactor and introducing circulated cooling water. Since the first polymerization reaction is an exothermic reaction, a part of propylene in the reaction slurry is vaporized by the heat released during the first polymerization reaction to form propylene gas. The propylene gas enters into the first reaction condenser 106, after being discharged from the top of the first reactor 105, and flows into the first propylene condensate tank 107 for gas-liquid separation after being condensed to liquid propylene via the first reaction condenser 106. The liquid obtained from the gas-liquid separation flows back to the first reactor 105 for cyclic utilization and is used for removing heat of the first polymerization reaction within the first reactor 105. The gas obtained from the gas-liquid separation is propylene gas, and returned to the first reactor 105 for cyclic utilization as the reaction raw material after being pressurized via a first reaction circulating fan 108.

When the reaction in the first reactor 105 is completed, the resultant in the first reactor 105 is delivered to the second reactor 109 for a first gas-phase reaction by means of its own pressure, and the first gas-phase reaction is performed at a pressure of 1.5 MPaG to 2.7 MPaG, a reaction temperature of 70°C to 150°C for a period of 3 hours to 4 hours. A part of propylene gases in the second reactor 109 carries few powder and enters into a second reaction cyclone separator 110 for a second gas-solid separation after being discharged via an air bag of the second reactor 109. The propylene gas obtained from the second gas-solid separation enters into a second propylene condensate tank 112 after being condensed via a second reaction condenser 111, and the liquid propylene collected in the second propylene condensate tank 112 and the newly added fresh propylene are delivered to the second reactor 109 via a first propylene condensate pump 113, in particular, the fresh propylene is used as a reaction raw material for the first gas-phase reaction. The liquid propylene obtained from condensation of the second reaction condenser 111 is configured for removing heat of the first gas-phase reaction in the second reactor 109. The gases in the second propylene condensate tank 112 are returned to the second reactor 109 in two ways after being pressurized via a second reaction circulating fan 114, in particular, one part of the gases delivers solid powder obtained from separation of the second reaction cyclone separator 110 to the second reactor 109 for a continued polymerization, and the other part of the gases directly enters into the second reactor 109 to participate in the polymerization reaction. Ethylene and hydrogen gas are introduced into the second propylene condensate tank 112 for adjusting, so as to obtain different product grades. Production of products of a part of grades is completed in the second reactor 109, and the products are delivered to the steaming unit through a reversing valve 115. Products of a part of grades need to continue the reaction in a third reactor 117, so materials in the second reactor 109 enter into the third reactor 117 for a second gas-phase reaction through the reversing valve 115. The reversing valve 115 may be a 30° reversing valve, a 60° reversing valve or a 120° reversing valve.

When the first gas-phase reaction in the second reactor 109 is completed, the resultant in the second reactor 109 is delivered to an air lock 116 by means of its own pressure. The air lock 116 is configured for isolation of the production lines of the second reactor 109 and the third reactor 117, and a part of gases enters into a propylene recycling system through the air lock 116, thereby adjusting the reaction pressure within the third reactor 117. A part of gases and all solids enter into the third reactor 117 for a second gas-phase reaction at a pressure of 1.0 MPaG to 2.0 MPaG, a reaction temperature of 70°C to 150°C for a period of 2 hours to 3 hours. A part of propylene gases in the third reactor 117 carries few powder and enters into a third reaction cyclone separator 118 for a third gas-solid separation after being discharged via an air bag of the third reactor 117. The propylene gases obtained from separation enter into a third propylene condensate tank 120 after being condensed via a third reaction condenser 119, and liquid propylene collected in the third propylene condensate tank 120 and the newly added fresh propylene are delivered to the third reactor 117 via a second propylene condensate pump 121. The fresh propylene is used as a raw material for the second gas-phase reaction. The liquid propylene obtained by condensation of the third reaction condenser 119 is configured for removing heat of the polymerization reaction in the third reactor 117. The gases in the third propylene condensate tank 120 are returned to the third reactor 117 in two ways after being pressurized via a third reaction circulating fan 122, in particular, one part of the gases delivers solid powder obtained from separation of the third reaction cyclone separator 118 to the third reactor 117 for a continued polymerization, and the other part of the gases directly enters into the third reactor 117 to participate in the polymerization reaction. Ethylene and hydrogen gas are introduced into the third propylene condensate tank 120 for adjusting, so as to obtain different product grades. After the reaction is completed, materials within the reactor enter into a steaming process.

A first rotary discharge valve 123 and a first ejector 124 are provided at the bottom of the second reaction cyclone separator 110, a second rotary discharge valve 125 and a second ejector 126 are provided at the bottom of the third reaction cyclone separator 118, and the first rotary discharge valve 123, the first ejector 124, the second rotary discharge valve 125 and the second ejector 126 are configured for discharging for the second reaction cyclone separator 110 and the third reaction cyclone separator 118. The first rotary discharge valve 123 and the second rotary discharge valve 125 may be a pneumatic gate valve or a manual valve.

The second reactor 109 and the third reactor 117 may be arranged in series, or in parallel; the second reactor 109 and the third reactor 117 are single air bag types or double air bag types.

Referring to FIG. 2, FIG. 2 is a process flow diagram of a steaming unit in one embodiment of a device for preparing SPG II polypropylene according to the present application. A mixed material of propylene gas from the polymerization unit and solid polypropylene enters into a bag filter 201 for a first gas-solid separation, and propylene gas obtained from separation is discharged through a pipe orifice above the bag filter 201, enters into a propylene cooler 203 for exchanging heat with the circulated cooling water, then enters into a propylene gas buffer tank 204, and then after being pressurized via a propylene gas pressurization fan 205, a small part of the propylene gas enters into the bag filter 201 for back blowing the bag therein, and most of the propylene gas enters into the propylene recycling process. Polypropylene solid powder obtained from separation of the bag filter 201 enters into a steamer 202 by means of the gravity so as to further remove propylene gas from the materials. The polypropylene solid powder entering into the steamer 202 is fully mixed and contacted with low-pressure steam introduced from the bottom and the middle of the steamer 202 under mechanical stirring of a stirrer of the steamer, and propylene gas in the polypropylene solid powder is taken out by the low-pressure steam. The low-pressure steam, propylene gas and few solid particles are discharged through the top of the steamer 202 and enter into a steamer cyclone separator 206 for gas-solid separation. The solid materials obtained from separation of the steamer cyclone separator 206 are delivered to the steamer 202 through a third rotary discharge valve 207; and gases obtained from separation of the steamer cyclone separator 206 enter into a steamer washing tower 208 for washing. The washing water used by the steamer washing tower 208 is hot water at 100°C, and the hot water is delivered to a middle-upper part of the steamer washing tower 208 through a washing tower circulating pump 210 to wash gases from the steamer cyclone separator 206. The steam in this process gases is condensed, a part of gases not condensed is further condensed through a condenser at the top of the steamer washing tower 208, a condensate liquid flows back to the steamer washing tower 208, the gas not condensed is propylene gas, and this part of propylene gas enters into the propylene recycling process for recycling.

Mineral oil added for dissolving the main catalyst, the cocatalyst and the electron donor in the polymerization unit is discharged from a middle-upper part of the steamer washing tower 208 to a hydrocarbon-water-separation tank 211, most of hot water in the hydrocarbon-water-separation tank 211 are indrawn by the washing tower circulating pump 210, and a small amount of oil, hydrocarbon and hot water are discharged from the system via an upper part of the hydrocarbon-water-separation tank 211. A steam condensate condensed via the steamer washing tower 208 is delivered to a steaming system for cyclic utilization. When the steamer 202 has abnormal operating conditions, condensed water is produced therein, and the condensate may be discharged through a steam trap 209 mounted at the bottom of the steamer 202, thereby ensuring stability of the system. The organic matters, mineral oils and oligomers in the products are removed by the steaming process.

The third rotary discharge valve 207 for discharging is provided at the bottom of the steamer cyclone separator 206, and may be a pneumatic gate valve or a manual valve. The steamer washing tower 208 may be an integral type of a condenser and a washing tower, or a separate type of a condenser and a washing tower.

Referring to FIG. 3, FIG. 3 is a process flow diagram of a drying unit in one embodiment of a device for preparing SPG II polypropylene according to the present application. The drying unit uses a vertical fluidized bed, and removes moisture in propylene using circulating nitrogen gas, such that a moisture content in the product meets the standard. The drying unit includes a dryer 301, a dryer cyclone separator 302, a first powder hopper 304, a second powder hopper 312, a dry gas washing tower 306, a plate heat exchanger 308, a mesh demister 309, a dry gas circulating fan 310 and a dry gas heater 311. The bottom of the dryer 301 is in communication with the second powder hopper 312, the top of the dryer 301 is in communication with the dryer cyclone separator 302 at a middle-upper part of the dryer cyclone separator 302, the bottom of the dryer cyclone separator 302 is in communication with the first powder hopper 304, the top of the dryer cyclone separator 302 is in communication with the dry gas washing tower 306 at a middle-lower part of the dry gas washing tower 306, the top of the dry gas washing tower 306 is in communication with the mesh demister 309, and the mesh demister 309, the dry gas circulating fan 310, the dry gas heater 311 and the bottom of the dryer 301 are connected sequentially, and the bottom of the dryer cyclone separator 302, each of the bottom of the first powder hopper 304 and the bottom of the second powder hopper 312 is provided with rotary a discharge valve.

Solid polypropylene particles from the steaming unit are evenly distributed by distribution plates within the dryer 301 after flowing into the middle of the dryer 301 from a feed pipe of the dryer 301, solid polypropylene particles from the steaming unit are carried and dries by a dry gas (e.g., but not limited to nitrogen gas) at 110°C to 150°C, and when reaching a certain dwell time, the dried polypropylene particles spill over a spill plate within the dryer 301, flow into the second powder hopper 312 by means of the gravity, then are delivered into a third ejector 315 (or a fourth ejector 316) via a sixth rotary discharge valve 313 (or a seventh rotary discharge valve 314), and are delivered to a stock bin by nitrogen gas from an air supply system. After the materials are dried in the dryer 301, the obtained wet nitrogen gas enters into the dryer cyclone separator 302 for gas-solid separation after leaving the pipe orifice at the top of the dryer 301. A fourth rotary discharge valve 303 is provided at the bottom of the dryer cyclone separator 302, solid powder obtained from separation enters into the first powder hopper 304, and then delivered to the stock bin by nitrogen gas from the fourth ejector 316 after being delivered to a fifth ejector 317 via a fifth rotary discharge valve 305; gases separated from the dryer cyclone separator 302 enter into the dry gas washing tower 306 from the middle-lower part of the dry gas washing tower 306, and reversely contact and wash with a washing the liquid after being pressurized by a washing liquid circulating pump 307 and cooled by the plate heat exchanger 308, and the washed dry gas enters into the mesh demister 309 to further remove water carried in the dry gas after being demisted by a baffle plate demister at the top of the dry gas washing tower 306. The nitrogen gas after being completely demisted enters into the dryer 301 from the bottom of the dryer 301 to dry wet materials therein after sequentially being pressurized via the dry gas circulating fan 310 and being heated to 110°C via the dry gas heater 311.

The dryer 301 may be a vertical fluidized bed, in which the distribution plates may be arranged in one layer, or two layers. The fourth rotary discharge valve 303 and the fifth rotary discharge valve 305 may be a pneumatic gate valves or a manual valve. The sixth rotary discharge valve 313 and the seventh rotary discharge valve 314 may be a pneumatic gate valves, or a Y-shaped reversing valve combined by two valves. The plate heat exchanger 308 may be a tube type heat exchanger. The dry gas heater 311 may be a tube type heat exchanger or a fin heat exchange or an electric heater.

A method for preparing SPG II polypropylene in the present application includes the steps of:
step (1), charging a reaction raw material containing propylene into the pre-polymerization kettle for a pre-polymerization reaction, and charging a resultant of the pre-polymerization reaction into the first reactor for a first polymerization reaction, wherein reaction heat produced during the first polymerization reaction is removed by vaporization of the propylene;
step (2), charging a resultant of the first polymerization reaction in step (1) into the second reactor for a first gas-phase reaction, wherein reaction heat produced during the first gas-phase reaction is removed by vaporization of the propylene; and
step (3), performing a first gas-solid separation on a resultant of the first gas-phase reaction in step (2), recycling gases obtained from the first gas-solid separation, and steaming solids obtained from the first gas-solid separation using steam to remove organic matters and oligomers from the resultant of the first gas-phase reaction in step (2); drying moist materials after steaming to obtain SPG II polypropylene.

In one embodiment, the method further includes step (2-1) between step (2) and step (3); the step (2-1) is: charging the resultant of the first gas-phase reaction in step (2) into a third reactor for a second gas-phase reaction.

To sum up, introduction of the catalyst in reaction of the device and method for preparing SPG II polypropylene of the present application uses solvent-fee feeding technique, which reduces the catalyst solvent recycling process, thereby reducing equipment investment, and refining production process. The pre-polymerization reaction of the present application adopts the low-temperature pre-polymerization reaction, by which the distribution of grain size of the products is better. The pre-polymerization reaction and the first polymerization reaction are performed in liquid propylene without use of inert solvent, so monomer concentration within the reaction system is high, and a rate of polymerization is fast, such that the production capability of the device is largely improved. The viscosity of polypropylene slurry of the present application is low, which is easy to be mechanically stirred, such that design and manufacturing costs of the reactor in the device are reduced, meanwhile, the energy consumption in the device and reaction process is reduced. In the reaction of the present application, flashing of propylene is adopted to remove heat without use of large liquid pump, which saves electricity consumption. The product obtained from the preparation method and device of the present application has a high cleanliness, and high-quality products with wide coverage of grades may be obtained. The preparation method of the present application has a low requirement on the purity of the raw material monomer propylene, so the source of the raw material propylene is abundant, thereby reducing production costs. The preparation method and device of the present application adopt a new horizontal gas-phase piston flow reactor, which is similar to a plug flow reactor, may avoid a short circuit of the catalyst, and improve reaction efficiency, thereby reducing a volume of the reactor, and decreasing investment of fixed assets. The volume of the reactor is much smaller than that of the gas-phase reactor in other processes, thereby improving safety of the process system. The preparation method of the present application has simple procedures, low investment, fast effect, simple operation, flexible production and flexible switching of the product grades. The second reactor and the third reactor may produce products of the same grade simultaneously, and the second reactor and the third reactor also may produce products of different grades simultaneously, and the two production lines may be separated by a air lock. The device of the present application has high safety and operability. The preparation method and device of the present application do not produce block materials, which overcomes the disadvantage that the horizontal kettle process is prone to producing block materials. The device of the present application has a short construction cycle and compact arrangement, and may be constructed in a modular manner. The device of the present application has low investment costs, which is approximately one-third of the mainstream device.

The bag filter of the steaming unit of the present application uses propylene gas from an outlet of the bag filter for reverse blowing, which simplifies the process. The steamer washing tower is washed using hot water, and hot water collected after washing is delivered to the steaming system for cyclic utilization, thereby saving energy consumption. A steam trap is provided at the bottom of the steamer, which can discharge the steam condensate within the steamer under abnormal operating conditions, so the water content at an inlet of the materials of the subsequent drying system is reduced while ensuring stability of the steaming system. Therefore, the energy consumption of the drying system is saved, and the stable operation of the subsequent processes is ensured. A steam blowing pipeline is additionally provided at the bottom of the third rotary discharge valve, so as to prevent the materials from blocking.

The distribution plates for solid materials of the equipment at the bottom of the dryer feed pipe of the drying unit in the present application effectively solve the problem of easily accumulating the materials directly blow the feed pipe. The height of the spill plate inside the steamer is adjustable, thus the dwell time of the materials may be adjusted by adjusting the height of the spill plate, which increases the operating flexibility of the drying system.

Further, a plurality of other embodiments may be included in the present application, and various corresponding changes and modifies may be made by those skilled in the art according to the present application without departing from spirit and essence of the present application, but these corresponding changes and modifies shall fall into the protection scope of the appended claims of the present application.

## Claims

1. A device for preparing SPG II polypropylene, comprising a polymerization unit, a steaming unit and a drying unit;
wherein the polymerization unit comprises a pre-polymerization kettle, a first reactor, a first reaction condenser, a first propylene condensate tank and a second reactor; wherein the first reactor is in communication with the pre-polymerization kettle; the first reaction condenser is in communication with a top of the first reactor; a top of the first propylene condensate tank is in communication with the first reaction condenser and the first reactor, respectively, and a bottom of the first propylene condensate tank is in communication with the first reactor; and a top of the second reactor is in communication with a bottom of the first reactor.

2. The device for preparing SPG II polypropylene according to claim 1, wherein the polymerization unit further comprises a second reaction cyclone separator, a second reaction condenser and a second propylene condensate tank, wherein the second reaction cyclone separator is in communication with a top of the second reactor, the second reaction condenser is in communication with a top of the second reaction cyclone separator, the second propylene condensate tank is in communication with the second reaction condenser, and the second propylene condensate tank is further in communication with the second reactor.

3. The device for preparing SPG II polypropylene according to claim 1 or 2, wherein the polymerization unit further comprises a third reactor, a third reaction cyclone separator, a third reaction condenser and a third propylene condensate tank, wherein the third reaction cyclone separator is in communication with a top of the third reactor, the third reaction condenser is in communication with a top of the third reaction cyclone separator, the third propylene condensate tank is in communication with the third reaction condenser, and the third propylene condensate tank is further in communication with the third reactor; the second reactor and the third reactor are arranged in series or in parallel; an air lock and a reversing valve are provided between the second reactor and the third reactor, and the reversing valve is configured to be a 30° reversing valve, a 60° reversing valve or a 120° reversing valve; each of the second reactor and the third reactor is a single air bag type or a double air bag type.

4. The device for preparing SPG II polypropylene according to claim 1, wherein the steaming unit comprises: a bag filter, a propylene cooler, a propylene gas buffer tank, a steamer, a steamer cyclone separator, a steamer washing tower and a hydrocarbon-water-separation tank; wherein a top of the bag filter, the propylene cooler and the propylene gas buffer tank are connected sequentially, and a bottom of the bag filter is in communication with the steamer; a top of the steamer is in communication with the steamer cyclone separator; a bottom of the steamer cyclone separator is in communication with the steamer; a top of the steamer cyclone separator is in communication with the steamer washing tower; the steamer washing tower, at a middle-upper part of the steamer washing tower, is in communication with the hydrocarbon-water-separation tank; and the steamer washing tower is configured to be an integral type of a condenser and a washing tower, or a separate type of a condenser and a washing tower.

5. The device for preparing SPG II polypropylene according to claim 1, wherein the drying unit comprises: a dryer, a dryer cyclone separator, a first powder hopper, a second powder hopper, a dry gas washing tower, a plate heat exchanger, a mesh demister, a dry gas circulating fan and a dry gas heater; wherein a bottom of the dryer is in communication with the second powder hopper, a top of the dryer is in communication with the dryer cyclone separator at a middle-upper part of the dryer cyclone separator, a bottom of the dryer cyclone separator is in communication with the first powder hopper, a top of the dryer cyclone separator is in communication with the dry gas washing tower at a middle-lower part of the dry gas washing tower, a top of the dry gas washing tower is in communication with the mesh demister, and the mesh demister, the dry gas circulating fan, the dry gas heater and the bottom of the dryer are connect sequentially; a spill plate, and a plurality of distribution plates evenly distributed are provided inside the dryer; each of the bottom of the dryer cyclone separator, a bottom of the first powder hopper and a bottom of the second powder hopper is provided with a rotary discharge valve; the rotary discharge valve is configured to be a pneumatic gate valve, or a Y-shaped reversing valve combined by two valves; the plate heat exchanger is configured to be a tube type heat exchanger; and the dry gas heater is configured to be a tube type heat exchanger, or a fin type heat exchanger, or an electric heater.

6. A method for preparing SPG II polypropylene adopting the device for preparing SPG II polypropylene according to any one of claims 1-5, comprising the steps of:
step (1), charging a reaction raw material containing propylene into the pre-polymerization kettle for a pre-polymerization reaction, and charging a resultant of the pre-polymerization reaction into the first reactor for a first polymerization reaction, wherein reaction heat produced during the first polymerization reaction is removed by vaporization of the propylene;
step (2), charging a resultant of the first polymerization reaction in step (1) into the second reactor for a first gas-phase reaction, wherein reaction heat produced during the first gas-phase reaction is removed by vaporization of the propylene; and
step (3), performing a first gas-solid separation on a resultant of the first gas-phase reaction in step (2), recycling gases obtained from the first gas-solid separation, and steaming solids obtained from the first gas-solid separation using steam to remove organic matters and oligomers from the resultant of the first gas-phase reaction in step (2); drying moist materials after steaming to obtain SPG II polypropylene.

7. The method for preparing SPG II polypropylene according to claim 6, wherein in step (1), the reaction raw material comprises propylene, a main catalyst, a cocatalyst, a electron donor and a mineral oil, wherein the main catalyst is titanium magnesium catalyst TiCl₄/MgCl₂; the cocatalyst is a trialkylaluminum compound, which is at least one of triethyl aluminum and tri-n-butylaluminum; the electron donor is at least one selected from the group consisting of dicyclopentyl dimethoxysilane, cyclohexyl dimethoxysilane and triethoxysilane; a pressure for the pre-polymerization reaction is from 2.0 MPaG to 6.0 MPaG, a temperature for the pre-polymerization reaction is from -5 °C to 70 °C, and a period for the pre-polymerization reaction is from 8 minutes to 30 minutes; a pressure for the first polymerization reaction is from 2.0 MPaG to 4.0 MPaG, a temperature for the first polymerization reaction is from 30 °C to 95 °C, and a reaction period for the first polymerization reaction is from 0.5 hour to 2 hours; in the reaction raw material, after condensation, a gas-liquid separation is performed on propylene gas formed by vaporization of a part of propylene due to heat released in the first polymerization reaction, gases obtained from the gas-liquid separation are returned to the first reactor as the reaction raw material for cyclic utilization, and liquids obtained from the gas-liquid separation are configured to remove heat from the first polymerization reaction of the first reactor.

8. The method for preparing SPG II polypropylene according to claim 6, wherein in step (2), a pressure for the first gas-phase reaction is from 1.5 MPaG to 2.7 MPaG, a temperature for the first gas-phase reaction is from 70 °C to 150 °C, and a period for the first gas-phase reaction is from 3 hours to 4 hours; in step (2), during the first gas-phase reaction, gases carrying solid particles are discharged from the top of the second reactor, the gases carrying solid particles undergo a second gas-solid separation, after condensation, gases obtained from the second gas-solid separation are returned to the second reactor as the reaction raw material for cyclic utilization or configured to remove heat from the first gas-phase reaction of the second reactor, and after mixing with ethylene and hydrogen gas, and solids obtained from the second gas-solid separation are returned to the second reactor to perform the first gas-phase reaction again.

9. The method for preparing SPG II polypropylene according to claim 6, wherein the method further comprises step (2-1) between step (2) and step (3); the step (2-1) is: charging the resultant of the first gas-phase reaction in step (2) into a third reactor for a second gas-phase reaction, wherein, during the first gas-phase reaction, reaction heat is removed by vaporization of propylene; a gas-phase resultant obtained from the second gas-phase reaction undergo a third gas-solid separation, after condensation, gases obtained from the third gas-solid separation are returned to the third reactor as the reaction raw material for cyclic utilization or configured to remove heat from the second gas-phase reaction of the third reactor, and after mixing with ethylene and hydrogen gas, solids obtained from the third gas-solid separation are returned to the third reactor for the second gas-phase reaction again; a pressure for the second gas-phase reaction is from 1.0 MPaG to 2.0 MPaG, a temperature for the second gas-phase reaction is from 70 °C to 150 °C, and a period for the second gas-phase reaction is from 2 hours to 3 hours.

10. The method for preparing SPG II polypropylene according to claim 6, wherein the drying uses a vertical fluidized bed, and removes moisture using circulating nitrogen gas.
